# EUROPÄISCHE PATENTANMELDUNG

(11) **EP 2 439 622 A1**
(43) Veröffentlichungstag der Anmeldung: **11.04.2012**
(21) Anmeldenummer: 10186721.6
(22) Anmeldetag: 06.10.2010
(51) Int. Cl.: G06F 3/044, G06F 3/041, G06F 3/045

(54) **Bedien- und Beobachtungsgerät und Verfahren hierfür**

(71) Anmelder: Siemens Aktiengesellschaft, 80333 München (DE)
(72) Erfinder: Irlbacher, Günther, 92539 Schönsee (DE); Wolf, Horst, 91056 Erlangen (DE)

(57) **Zusammenfassung**

Die Erfindung betrifft ein Bedien- und Beobachtungsgerät (1), umfassend einen Bildschirm (2), einen ersten berührungssensitiven Sensor (11), einen zweiten berührungssensitiven Sensor (12), wobei der erste Sensor (11) und der zweite Sensor (12) derart angeordnet sind, dass ein Bedienvorgang mit einem menschlichen Finger (4) oder einem Bedienstift auf beide Sensoren (11,12) gleichzeitig wirkt, weiterhin umfassend eine erste Auswerteeinheit (21), eine zweite Auswerteeinheit (22), wobei die erste Auswerteeinheit (21) mit dem ersten Sensor (11) elektrisch verbunden ist und dazu ausgestaltet ist einen ersten Satz von Berührungskoordinaten (101), welche sich aus der Bedienung des ersten Sensors (11) ergeben, zu erfassen, weiterhin ist der zweite Sensor (12) mit der zweiten Auswerteeinheit (22) elektrisch verbunden, wobei diese dazu ausgestaltet ist ein Einwirken auf den zweiten Sensor (12) zu erfassen, wobei ein Diagnosemittel (30) vorhanden ist, welches einen ersten Signaleingang (31) und einen zweiten Signaleingang (32) aufweist, wobei der erste Signaleingang (31) mit der ersten Auswerteeinheit (21) und der zweite Signaleingang (32) mit der zweiten Auswerteeinheit (22) verbunden ist, dabei ist das Diagnosemittel (30) dazu ausgestaltet auf ein erstes Signal und ein zweites Signal ein Prüfkriterium anzuwenden und bei erfülltem Prüfkriterium einen Freigabeausgang (33) zu aktivieren, um eine Fehlfunktion des ersten Sensors (11) auszuschließen und die Sicherheit zu erhöhen.

## Beschreibung

Die Erfindung betrifft ein Bedien- und Beobachtungsgerät, umfassend einen Bildschirm, einen ersten berührungssensitiven Sensor, einen zweiten berührungssensitiven Sensor, wobei der erste Sensor und der zweite Sensor derart angeordnet sind, dass ein Bedienvorgang mit einem menschlichen Finger oder einem Bedienstift auf beide Sensoren gleichzeitig wird, weiterhin umfassend eine erste Auswerteeinheit, eine zweite Auswerteeinheit, wobei die erste Auswerteeinheit mit dem ersten Sensor elektrisch verbunden ist und dazu ausgestaltet ist, einen ersten Satz von Berührungskoordinaten, welche sich aus der Bedienung des ersten Sensors ergeben, zu erfassen, weiterhin ist der zweite Sensor mit der zweiten Auswerteeinheit elektrisch verbunden, wobei diese dazu ausgestaltet ist, ein Einwirken auf den zweiten Sensor zu erfassen.

Weiterhin betrifft die Erfindung ein Verfahren zum Betrieb eines Bedien- und Beobachtungsgerät, insbesondere eine Verwendung des Bedien- und Beobachtungsgeräts bei fehlersicheren Automatisierungsanlagen.

Bedien- und Beobachtungsgeräte, wie z.B. ein Panel PC mit einem Touch Display zum direkten Bedienen einer Prozessgrafik, oder Bedienfronten mit einem Touchscreen werden zunehmend in der industriellen Automatisierung eingesetzt. Da diese Geräte möglichst auch in verfahrenstechnischen Anlagen der Medizintechnik, der Kraftwerkstechnik, der Luft- und Raumfahrttechnik, der Chemischen Industrie, der Pharmazeutischen Industrie und auch in der Petrochemischen Industrie eingesetzt werden sollen, müssen diese Bedien- und Beobachtungsgeräte sicher betrieben werden. Bisher bekannte Touch-Eingabesysteme sind weder fehlertolerant noch eignen sie sich für hochverfügbare (Safety) Applikationen. Fällt beispielsweise ein herkömmliches Touchsystem, z.B. mit einem resistiven Touch durch einen Defekt aus bzw. liefert es fehlerhafte Bedien-Koordinaten, kann der Defekt weder erkannt noch eine sichere Bedienung der Anlage bzw. des Gerätes erfolgen oder garantiert werden.

Es ist die Aufgabe der Erfindung ein Bedien- und Beobachtungsgerät bereitzustellen, bei dem eine sichere Bedienung in Verbindung mit einer fehlersicheren Automatisierungsanlage gegeben ist.

Die Aufgabe wird mittels eines Bedien- und Beobachtungsgerätes mit der Merkmalskombination des Anspruchs 1 dadurch gelöst, dass ein Diagnosemittel vorhanden ist, welches einen ersten Signaleingang und einen zweiten Signaleingang aufweist, wobei der erste Signaleingang mit der ersten Auswerteeinheit und der zweite Signaleingang mit der zweiten Auswerteeinheit verbunden ist. Dabei ist das Diagnosemittel dazu ausgestaltet, auf ein erstes Signal- und ein zweites Signal ein Prüfkriterium anzuwenden und bei erfülltem Prüfkriterium einen Freigabeausgang zu aktivieren, um eine Fehlfunktion des ersten Sensors auszuschließen und die Sicherheit zu erhöhen. Mit Vorteil liegen bei diesem Bedien- und Beobachtungsgerät nun zwei Sensoren vor, wobei der eine Sensor die wirklichen Berührungskoordinaten liefert und der andere Sensor eine Bestätigung dafür gibt, ob eine Bedienung erfolgt sein kann. Wenn, für den Fall, dass der erste Sensor und/oder seine Auswerteinheit defekt sein sollte und willkürliche Berührungskoordinaten liefert, kann durch die Abfrage des zweiten Sensors sicher gestellt werden, ob überhaupt eine Bedienung stattgefunden hat. In einem einfachen Fall könnten die beiden Auswerteeinheiten je ein EINS-Signal über zugehörige Signalleitungen an die Signaleingänge des Diagnosemittels bereitstellen. Ein mögliches Prüfkriterium wäre sodann eine UND-Verknüpfung der beiden Signale. Ergibt die UND-Verknüpfung wiederum ein EINS-Signal so kann ein Freigabeausgang an dem Diagnosemittel aktiviert werden. Nur bei aktivem Freigabeausgang können entweder in dem Bedien- und Beobachtungsgerät oder in einer angeschlossenen Automatisierungsanlage die Berührkoordinaten für gültig erklärt werden.

In einer vorteilhaften Ausgestaltung des Bedien- und Beobachtungsgeräts ist die zweite Auswerteeinheit dazu ausgestaltet einen zweiten Satz von Koordinaten, welche sich aus dem Einwirken der Bedienung auf den zweiten Sensor ergeben, zu erfassen. Die Sicherheit eines solchen Eingabegerätes kann durch die Erfassung von jetzt zwei Koordinatensätzen weiter erhöht werden.

Weiterhin ist es dabei von Vorteil, wenn das Diagnosemittel mit seinem Prüfkriterium dazu ausgestaltet ist, den ersten Satz von Berührungskoordinaten mit dem zweiten Satz von Koordinaten zu vergleichen und abhängig von dem Vergleichsergebnis den Freigabeausgang zu aktivieren. Bei dieser Ausgestaltung des Gerätes liegt jetzt mit dem zweiten Satz Koordinaten ein wirklicher zweiter Satz von zweiten Berührkoordinaten zu dem ersten Satz von Berührkoordinaten vor. Durch den Vergleich der beiden Sätze von Koordinaten kann jetzt mit Sicherheit bestimmt werden, ob die Berührungen wirklich zeitgleich an ein und demselben Punkt erfolgt sind und somit keine Fehlübertragung von Berührkoordinaten vorliegt.

Bei einem Einsatz von einem Bildschirm, ausgestaltet als ein flächiges LCD-Display, hat es sich als vorteilhaft erwiesen, wenn der erste Sensor und der zweite Sensor derart flächig auf dem Bildschirm angeordnet sind, dass durch eine Bedienung, beide Sensoren gleiche Koordinaten liefern.

In einer weiteren Ausgestaltung weist das Bedien- und Beobachtungsgerät für den ersten Sensor einen resistiven Touch-sensor und für den zweiten Sensor einen kapazitiven Touchsensor oder umgekehrt auf.

Weiterhin ist es vorteilhaft, wenn beide Sensoren eine bauliche Sensoreinheit bilden. Dabei kann der erste Sensor als eine erste transparente Scheibe ausgebildet sein, wobei eine Fläche die Berührfläche bildet und die zweite Fläche dieser Scheibe mit einer Indiumoxid-Schicht versehen ist, wobei diese Schicht sowohl eine Funktionsschicht des resistiven Touch-sensors als auch eine Funktionsschicht für den kapazitiven Touchsensor bildet.

Um eine Leitungsführung von den Sensoren zu den Auswerteeinheiten zu reduzieren ist es von Vorteil, wenn der erste Sensor und der zweite Sensor über einen Multiplexer an ihre jeweiligen Auswerteeinheiten angeschlossen sind.

Eine Sicherheit beim Betrieb eines Bedien- und Beobachtungsgerät, insbesondere für fehlersichere Automatisierungsanlagen kann durch das erfindungsgemäße Verfahren erhöht werden. Das eingesetzte Bedien- und Beobachtungsgerät, umfasst einen Bildschirm, einen ersten berührungssensitiven Sensor und einen zweiten berührungssensitiven Sensor, wobei ein erster Satz von Berührungskoordinaten, welche sich aus der Bedienung des ersten Sensors ergeben, erfasst wird, und daraus ein erstes Signal abgeleitet wird, ein Einwirken auf den zweiten Sensor erfasst wird und daraus ein zweites Signal abgeleitet wird, auf das erste Signal und das zweite Signal ein Prüfkriterium angewendet und bei erfülltem Prüfkriterium ein Freigabeausgang aktiviert wird, um eine Fehlfunktion des ersten Sensors auszuschließen und die Sicherheit zu erhöhen.

Bei einem Einsatz des Bedien- und Beobachtungsgeräts in einer auf Sicherheit ausgelegten Automatisierungsanlage wird bei Erkennen einer Bedienung des Gerätes und nicht aktivierten Freigabeausgang, die Automatisierungsanlage in einen fehlersicheren Zustand versetzt.

Ein Ausgestaltungsbeispiel zeigt die Zeichnung, dabei ist in
- FIG 1: ein hochverfügbares Doppel-Touch-System und in
- FIG 2: eine bauliche Einheit aus zwei Sensoren als eine Sensoreinheit dargestellt.

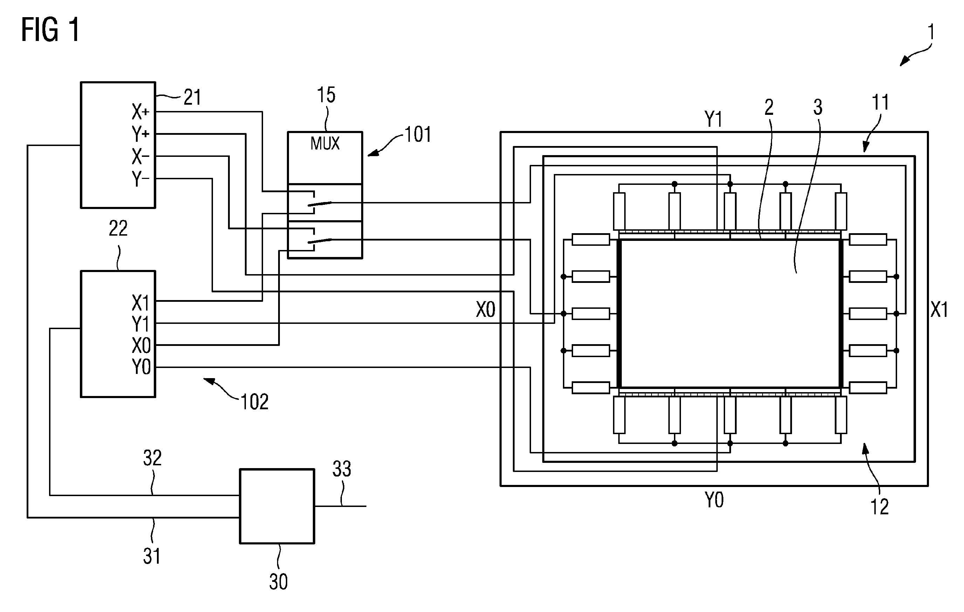

Gemäß FIG 1 ist ein Bedien- und Beobachtungsgerät 1 ausgestaltet als ein zweikanaliges, hochverfügbares Doppel-Touch-System dargestellt. Ein Bildschirm 2, ein erster berührungssensitiver Sensor 11 und ein zweiter berührungssensitiver Sensor 12 bilden im Wesentlichen ein Touch-Display. Dabei ist für den Bildschirm 2 ein LCD-Flachdisplay eingesetzt, für den ersten berührungssensitiven Sensor 11 wird ein resistiver Touch-Sensor verwendet, für den zweiten berührungssensitiven Sensor 12 wird ein kapazitiver Toch-Sensor verwendet. Das so aufgebaute Touch-Display weist linksseitig eine X0-Seite, rechtsseitig eine X1-Seite, unten eine Y0-Seite und oben eine Y1-Seite auf. Der Aufbau eines resistiven Touch-Sensors und der Aufbau eines kapazitiven Touch-Sensors sind dem Fachmann bekannt, darum ist in der FIG 1 die Anschlussart an die Sensoren symbolisch durch Widerstandsschaltzeichen dargestellt.

Zur Erfassung von einem ersten Satz von Berührkoordinaten 101 ist eine erste Auswerteeinheit 21 über eine X+-Leitung, eine Y+-Leitung, eine X--Leitung und eine Y--Leitung mit dem ersten Sensor 11 verbunden. Die X+-Leitung und die X--Leitung führen dabei über einen Multiplexer 15. Die zweite Auswerteeinheit 21 kann beispielsweise als ein resistiver Touch-Controller für Vier-Draht bis Acht-Draht Touch-Funktionalität ausgestaltet sein.

Eine zweite Auswerteeinheit 22 steht zum Empfang eines zweiten Satzes von Berührkoordinaten 102 zur Verfügung, dabei ist die zweite Auswerteeinheit 22 über eine X1-Leitung, eine Y1-Leitung, eine X0-Leitung und eine Y0-Leitung mit dem zweiten Sensor 12 verbunden. Die zweite Auswerteeinheit 22 ist beispielsweise als ein kapazitiver Touch-Controller IQS420 ausgestaltet. Die X1-Leitung und die X0-Leitung werden wiederum über dem Multiplexer 15 an die entsprechenden Auswerteleitungen des zweiten Sensors 12 geführt.

Um eine Fehlfunktion des Bedien- und Beobachtungsgerät 1 auszuschließen und eine Sicherheit zu erhöhen, ist ein Diagnosemittel 30 vorhanden, welches einen ersten Signaleingang 31 und einen zweiten Signaleingang 32 aufweist. Dabei ist der erste Signaleingang 31 mit der ersten Auswerteeinheit 21 verbunden. Der zweite Signaleingang 32 ist mit der zweiten Auswerteeinheit 22 verbunden, dabei ist das Diagnosemittel 30 dazu ausgestaltet, die durch die erste Auswerteeinheit 21 und die zweite Auswerteinheit 22 aufbereiteten ersten und zweiten Sätze von Berührkoordinaten 101, 102 zu vergleichen und abhängig von dem Vergleichsergebnis einen Freigabeausgang 33 zu aktivieren.

Dadurch, dass der erste Sensor 11 und der zweite Sensor 12, jeweils unabhängig voneinander ein Drücken des Bedienfeldes, also der aktiven Zone 3, erkennt, können die Signale beider Touch-Sensoren miteinander verglichen und ausgewertet werden. Auf diese Art und Weise wird eine diagnosefähige Redundanz des Bedien- und Beobachtungsgerätes 1 erreicht. Die Sätze von Berührkoordinaten 101, 102 werden auch Touch-Koordinaten genannt. Bei einer Auswertung der Touch-Koordinaten müssen diese beiden Sätze nicht unbedingt identisch sein. Die jeweiligen X-, Y-, und evtl. Z-Koordinaten müssen sich zumindest in einem vom Bediener einstellbaren Toleranzbereich befinden, damit eine gültige Touch-Bedienung erkannt wird. Sollten die Koordinaten zu stark voneinander abweichen, also außerhalb der Toleranz liegen, so wird durch das Diagnosemittel 30 diese Diskrepanz erkannt und es kann zusätzlich zu dem Freigabeausgang 33 ein Fehler gemeldet werden. Dieser Fehler kann beispielsweise in ein fehlersicheres Automatisierungssystem weitergeleitet werden.

Die gleichzeitige Verwendung zweier voneinander getrennten Touch-Sensoren ermöglicht ein diagnosefähiges Touch-System für eine hochverfügbare Sicherheitsanwendung.

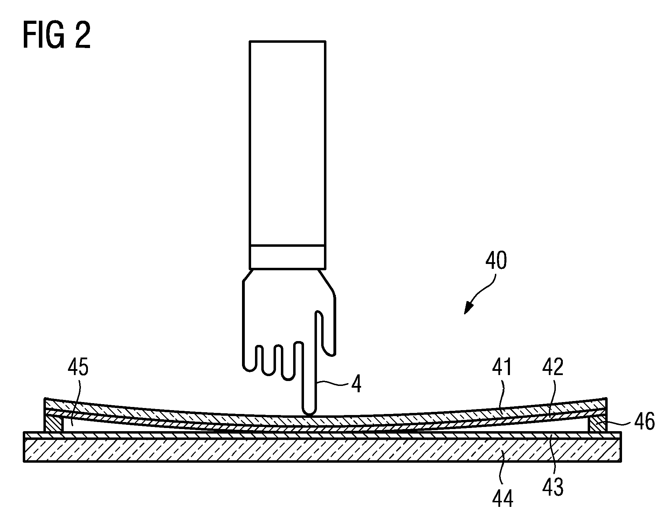

Gemäß FIG 2 ist eine Sensoreinheit 40 dargestellt, wobei diese Sensoreinheit 40 einen ersten Sensor 11 und einen zweiten Sensor 12 insich trägt. Der erste Sensor 11 ist dabei als eine transparente Scheibe 41 ausgebildet, wobei eine Fläche dieser transparenten Scheibe 41 eine Berührfläche bildet und die zweite Fläche der Scheibe 41 mit einer Indiumzinnoxid-(ITO)-Schicht 42 versehen ist. Es ist eine menschliche Bedienhand mit einem Finger 4 dargestellt, welche auf die erste transparente Scheibe 41 Druck ausübt. Die erste transparente Scheibe 41 kann beispielsweise als eine Dünnglasscheibe mit 0,2 mm ausgestaltet sein.

Als Basis für die Sensoreinheit 40 dient ein Trägerglas 44. Auf dieses Trägerglas 44 ist wiederum eine zweite ITO-Schicht 43 aufgebracht. Die erste transparente Scheibe 41 mit ihrer ersten ITO-Schicht 42 kann so als kapazitiver Touch-Sensor genutzt werden. Dabei ist es vorteilhaft, für die so ausgestaltete bauliche Einheit, dass im Wesentlichen nur zwei Scheiben verwendet werden müssen, nämlich die Dünnglasscheibe mit ihren 0,2 mm und das Trägerglas 44 mit vorzugsweise 3 mm Stärke. Die erste ITO-Schicht 42 bildet in Verbindung mit der zweiten ITO-Schicht 43 einen resistiven Touch-Sensor und die erste ITO-Schicht 42 bildet für sich betrachtet den kapazitiven Touch-Sensor.

Zusammenfassend kann gesagt werden, dass hier ein Doppel-Touch-System mit einem ersten Touch-Sensor, welcher projeziert kapazitiv arbeitet, und einem zweiten Touch-Sensor, welcher analog-resistiv arbeitet, vorliegt. Auf ein Trägerglas 44 (z.B. 3 mm) wird eine ITO-Schicht für den resistiven Touch-Sensor aufgedampft. Auf das Trägerglas 44 wird eine Dünnglasscheibe (z.B. 0,2 mm) über einen umlaufenden Abstandshalter 46 geklebt, so dass zwischen den beiden Glasscheiben ein Luftspalt 46 entsteht. Auf der Innenseite der Dünnglasscheibe, also auf der dem Bediener entgegengesetzten Seite, ist eine weitere ITO-Schicht aufgebracht. Diese arbeitet sowohl als Sensor für den projeziert kapazitiven Touch-Sensor als auch als eine Schicht des resistiven Touch-Sensors. Berühren sich die beiden ITO-Schichten durch z.B. einen Fingerdruck des Bedieners kann der Berührpunkt mittels eines auf dem Markt bekannten Touch-Controllers für analogresistive Touch-Sensoren ausgewertet werden. Um eine Leitungsführung zwischen den Touch-Sensoren und den Auswerteeinheiten zu minimieren, ist ein Multiplexer 15 zwischen den Auswerteeinheiten 21, 22 und den Sensoren 11, 12 angeordnet. Der Multiplexer 15 schaltet mindestens 10 mal pro Sekunde im Wechsel zwischen den beiden Touch-Sensoren hin und her.

## Patentansprüche

1. Bedien- und Beobachtungsgerät (1), umfassend
- einen Bildschirm (2),
- einen ersten berührungssensitiven Sensor (11),
- einen zweiten berührungssensitiven Sensor (12),
wobei der erste Sensor (11) und der zweite Sensor (12) derart angeordnet sind, dass ein Bedienvorgang mit einem menschlichen Finger (4) oder einem Bedienstift auf beide Sensoren (11,12) gleichzeitig wirkt, weiterhin umfassend
- eine erste Auswerteeinheit (21),
- eine zweite Auswerteeinheit (22),
wobei die erste Auswerteeinheit (21) mit dem ersten Sensor (11) elektrisch verbunden ist und dazu ausgestaltet ist einen ersten Satz von Berührungskoordinaten (101), welche sich aus der Bedienung des ersten Sensors (11) ergeben, zu erfassen, weiterhin ist der zweite Sensor (12) mit der zweiten Auswerteeinheit (22) elektrisch verbunden, wobei diese dazu ausgestaltet ist ein Einwirken auf den zweiten Sensor (12) zu erfassen,
**dadurch gekennzeichnet, dass** ein Diagnosemittel (30) vorhanden ist, welches einen ersten Signaleingang (31) und einen zweiten Signaleingang (32) aufweist, wobei der erste Signaleingang (31) mit der ersten Auswerteeinheit (21) und der zweite Signaleingang (32) mit der zweiten Auswerteeinheit (22) verbunden ist, dabei ist das Diagnosemittel (30) dazu ausgestaltet auf ein erstes Signal und ein zweites Signal ein Prüfkriterium anzuwenden und bei erfülltem Prüfkriterium einen Freigabeausgang (33) zu aktivieren, um eine Fehlfunktion des ersten Sensors (11) auszuschließen und die Sicherheit zu erhöhen.

2. Bedien- und Beobachtungsgerät (1) nach Anspruch 1,
wobei die zweite Auswerteeinheit (22) dazu ausgestaltet ist einen zweiten Satz von Koordinaten (102), welche sich aus dem Einwirken der Bedienung auf den zweiten Sensors ergeben, zu erfassen.

3. Bedien- und Beobachtungsgerät (1) nach Anspruch 2, wobei das Diagnosemittel (30) mit seinem Prüfkriterium dazu ausgestaltet ist den ersten Satz von Berührungskoordinaten (101) mit dem zweiten Satz von Koordinaten (102) zu vergleichen und abhängig von dem Vergleichsergebnis den Freigabeausgang (33) zu aktivieren.

4. Bedien- und Beobachtungsgerät (1) nach einem der Ansprüche 1 bis 3, wobei der erste Sensor (11) und der zweite Sensor (12) derart flächig auf dem Bildschirm (2) angeordnet sind, dass durch eine Bedienung, beide Sensoren (11,12) gleiche Koordinaten liefern.

5. Bedien- und Beobachtungsgerät (1) nach einem der Ansprüche 1 bis 4, wobei der erste Sensor (11) als ein resistiver Touchsensor und der zweite Sensor (12) als ein kapazitiver Touchsensor oder umgekehrt ausgestaltet ist.

6. Bedien- und Beobachtungsgerät (1) nach Anspruch 5, wobei die beiden Sensoren eine bauliche Sensoreinheit (40) bilden.

7. Bedien- und Beobachtungsgerät (1) nach Anspruch 6, wobei der erste Sensor (11) als eine erste transparente Scheibe (41) ausgebildet ist, wobei eine Fläche die Berührfläche bildet, und die zweite Fläche mit einer Indiumzinnoxid-Schicht (42) versehen ist, wobei die Schicht sowohl eine Funktionsschicht des resesitiven Touchsensors als auch eine Funktionsschicht für den kapazitiven Touchsensor bildet.

8. Bedien- und Beobachtungsgerät (1) nach einem der Ansprüche 1 bis 7, wobei der erste Sensor (11) und der zweite Sensor (12) über einen Multiplexer (15) an ihre jeweilige Auswerteeinheit (21, 22) angeschlossen ist.

9. Verfahren zum Betrieb eines Bedien- und Beobachtungsgerät (1),welches umfasst
- einen Bildschirm (2),
- einen ersten berührungssensitiven Sensor (11),
- einen zweiten berührungssensitiven Sensor (12),
wobei ein erster Satz von Berührungskoordinaten (101), welche sich aus der Bedienung des ersten Sensors (11) ergeben, erfasst wird, und daraus ein erstes Signal abgeleitet wird,
ein Einwirken auf den zweiten Sensor (12) erfasst wird, und daraus ein zweites Signal abgeleitet wird,
auf das erste Signal und das zweite Signal ein Prüfkriterium angewendet und bei erfülltem Prüfkriterium ein Freigabeausgang (33) aktiviert wird, um eine Fehlfunktion des ersten Sensors (11) auszuschließen und die Sicherheit zu erhöhen.

10. Verfahren nach Anspruch 9, wobei das Bedien- und Beobachtungsgerät (1) in einer auf Sicherheit ausgelegten Automatisierungsanlage betrieben wird und bei Erkennen einer Bedienung des Gerätes und nicht aktivierten Freigabeausgang, die Automatisierungsanlage in einen fehlersicheren Zustand versetzt wird.
